# EUROPÄISCHE PATENTSCHRIFT

(11) **EP 2 435 258 B1**
(45) Veröffentlichungstag und Bekanntmachung des Hinweises auf die Patenterteilung: **27.03.2013**
(21) Anmeldenummer: 09760804.6
(22) Anmeldetag: 17.11.2009
(51) Int. Cl.: B60C 11/04, B60C 19/00

(54) **FAHRZEUGLUFTREIFEN**
PNEUMATIC TIRE FOR VEHICLES
PNEU DE VÉHICULE

(30) Priorität: 27.05.2009 DE 102009025867
(43) Veröffentlichungstag der Anmeldung: 04.04.2012
(73) Patentinhaber: Continental Reifen Deutschland GmbH, 30165 Hannover (DE)
(72) Erfinder: XU, Qiao, 30419 Hannover (DE)
(74) Vertreter: Finger, Karsten
(86) Internationale Anmeldenummer: PCT/EP2009/065279
(87) Internationale Veröffentlichungsnummer: WO 2010/136084

(56) Entgegenhaltungen:
- EP-A- 0 687 582
- EP-A- 0 925 957
- EP-A- 1 410 927

## Beschreibung

Die Erfindung betrifft einen Fahrzeugluftreifen für Nutzfahrzeuge.

Ein Fahrzeugluftreifen mit einem Laufstreifen der eingangs genannten Art ist aus der US 4,114,671 B bekannt. Hier steht es im Vordergrund, die Griffeigenschaften des Reifens zu optimieren, um einen gleichmäßigen Abrieb sowie trotz zunehmendem Abrieb gute Griffeigenschaften sicherzustellen. Der Nutgrundpfad der Umfangsnuten dieses bekannten Laufstreifen verläuft in einer ausgeprägten Zickzack-Form, deren doppelte Amplitude dem gegenseitigen Abstand der Randkanten der Umfangsnut an der Laufstreifeperipherie entspricht. Die dreieckigen Flächen reichen von der Laufstreifenperipherie nahezu bis zum Nutgrund und sind Flächen von prismatischen Erhebungen. In derart ausgeführten Umfangsnuten können sich Fremdkörper, insbesondere Steine, sehr leicht verklemmen.

Eine Vielzahl von Patentanmeldungen und Patente befasst sich damit, Umfangsnuten in Laufstreifen derart auszuführen, dass sich Fremdkörper, insbesondere kleine Steine, in den Nuten nicht verfangen können. So ist beispielsweise aus der US 3,055,410 bekannt, in zickzackförmigen Umfangsnuten an den einspringenden Ecken Vorsprünge, die bis an den Nutgrund reichen, vorzusehen. Die bekannten Lösungen konnten in der Praxis jedoch nicht überzeugen.

Die EP 0925 957A, die einen Reifen gemäβ dem Oberbegriff von Anspruch 1 offenbart, EP 0687 582 A und die EP 1410 927 A offenbaren weitere Reifenprofile für Fahrzeugluftreifen mit besonderen Merkmalen.

Der Erfindung liegt die Aufgabe zu Grunde, bei einem Fahrzeugluftreifen der eingangs genannten Art den Laufstreifen derart auszuführen, dass Fremdkörper, insbesondere kleine Steine, verlässlich abgestoßen werden. Gleichzeitig sollen die Profilhaltbarkeit und die Geräuschentwicklung des Profils beim Abrollen günstig beeinflusst werden.

Gelöst wird die Aufgabe gemäß Anspruch 1.

Die Blockecken der Profilblöcke sind derart abgeschrägt ausgeführt und angeordnet, dass sie Flächen mit einem großen Öffnungswinkel zur Verfügung stellen können. Eindringenden Fremdkörpern, wie Steinen, stehen Abrollflächen zur Verfügung, die ein Hinausbefördert der Fremdkörper optimal unterstützen.

Dieser überraschende Effekt konnte insbesondere durch Simulationsberechnungen nachgewiesen werden, die die vorteilhafte Wirkung der erfindungsgemäßen Ausführung der jeweiligen Blockecken bestätigen. Die entsprechend abgeschrägten Blockecken haben ferner den entscheidenden Vorteil, dass sie die Geräuschentwicklung des Profils beim Abrollen sehr günstig beeinflussen. Durch die entsprechende Ausgestaltung der Blockecken wird ein Reifenprofil für LKW-Reifen erzielt, der sich durch einen geringen Schallpegel beim Abrollen des Fahrzeugreifens auszeichnet.

Es ist vorgesehen, dass der dreidimensionale schienenförmige Körper eine breite Oberseite und eine schmale Unterseite in Form von Parallelogrammen aufweist, wobei die schmale Unterseite in der Aufsicht diagonal zur Oberseite des dreidimensionalen Körpers angeordnet ist, wodurch der schienenförmige Körper in seiner Längsausrichtung eine tordierte Form aufweist. Dadurch werden die Blockkanten bzw. Blockecken der vier

zusammenhängenden Profilblöcke in einer speziellen Form abgeschrägt. Diese spezielle Form der abgeschrägten Blockecken hat den Vorteil, dass kleine Steine auf einfache Weise wieder aus dem Profilnegativ herausgedrückt werden.

In einer weiteren vorteilhaften Weiterbildung der Erfindung ist vorgesehen, dass die abgeschrägten Blockecken von der Oberseite der Profilblöcke zum Profilgrund hin eine stetige gekrümmte Oberfläche aufweisen, die sich aus dem Negativabdruck des schienenförmigen Körpers ergeben. Die stetig gekrümmten Oberflächen der abgeschrägten Blockkanten hat den Vorteil, dass der Effekt des Abweisens von kleinen Steinen erheblich verstärkt wird.

In einer weiteren vorteilhaften Weiterbildung der Erfindung ist vorgesehen, dass der Winkel zwischen der Umfangsrichtung der Umfangsnuten und der oberen Blockkante der abgeschrägten Blockecke zwischen 2 und 45 ° beträgt. Auf diese Weise ergibt sich eine asymmetrische Anordnung der entsprechenden abgeschrägten Blockkanten. Eine derartige Symmetrie wirkt sich-positiv auf die Reifenakustik des Reifenprofils aus.

In einer weiteren vorteilhaften Weiterbildung der Erfindung ist vorgesehen, dass die schmale Unterseite des schienenförmigen Körpers im Wesentlichen in Längsrichtung der Umfangsnuten angeordnet ist. Dadurch wird die symmetrische Anordnung der abgeschrägten Blockkanten bzw. Blockecken verstärkt.

In einer weiteren vorteilhaften Weiterbildung der Erfindung ist vorgesehen, dass die kürzeren Seiten des Parallelogramms der breiten Oberseite des dreidimensionalen Körpers eine Längenausdehnung von ca. 5 bis 20 % der Blockbreite der Profilblöcke aufweisen. Dadurch wird die Reifenakustik des Reifenprofils für LKW-Reifen verbessert.

In einer weiteren vorteilhaften Weiterbildung der Erfindung ist vorgesehen, dass die kürzeren Seiten des Parallelogramms der breiten Oberseite des dreidimensionalen Körpers eine Längenausdehnung von ca. 10 bis 50 % der Blockbreite der Profilblöcke aufweisen. Auf diese Weise werden die beiden gegenüberliegenden Profilblöcke nur um einen geringen Teilbereich abgeschrägt. Diese abgeschrägten Blockecken sind ausreichend, um entsprechende kleine Steine effektiv abweisen zu können.

In einer weiteren vorteilhaften Weiterbildung der Erfindung ist vorgesehen, dass die längeren Seiten des Parallelogramms der breiten Oberseite des dreidimensionalen Körpers eine Längenausdehnung von ca. 70 bis 130 % der Blocklänge der Profilblöcke aufweisen. Auf diese Weise entsteht an den gegenüberliegenden Profilblöcken eine abgeschrägte Kante, mit denen effektiv kleine Steine abgewiesen werden können.

In einer weiteren vorteilhaften Weiterbildung der Erfindung ist vorgesehen, dass die Tiefenabmessung des schienenförmigen Körpers ca. 25 % der Profiltiefe des Laufstreifens beträgt. Diese Tiefenabmessung ist im Allgemeinen ausreichend um Steine effektiv aus dem Profilnegativ abweisen zu können.

Anhand eines Ausführungsbeispiels soll die Erfindung erläutert werden. Es zeigen:
- Fig. 1:: eine Radialschnittansicht durch den Laufstreifen,
- Fig. 2:: eine Aufsicht auf einen Teilausschnitt des Reifenprofils,
- Fig. 3:: eine perspektivische Ansicht des Reifenprofils in Fig. 2,
- Fig. 4 bis 6:: verschiedene Ansichten des schienenförmigen Körpers.

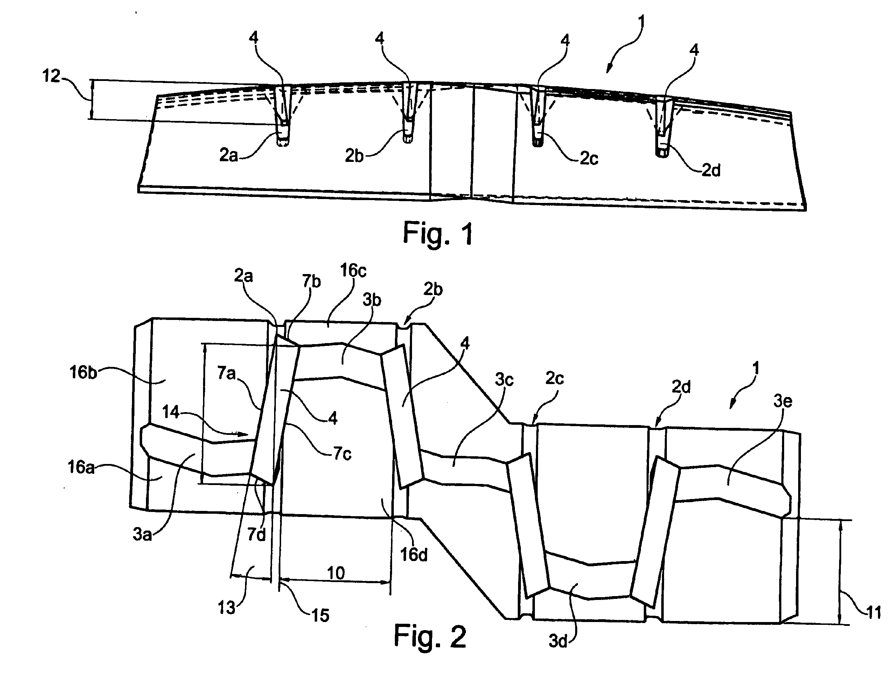

Die Fig. 1 zeigt den Laufstreifen 1 des erfindungsgemäßen Fahrzeugluflreifens für Nutzfahrzeuge. Es ist eine Radialschnittansicht des Laufstreifens 1 dargestellt. Die Umfangsnuten 2a bis 2d sind in Umfangsrichtung des Fahrzeugreifens angeordnet. In diesen Umfangsnuten 2a bis 2d sind die virtuellen schienenförmigen Körper 4 angeordnet, die im Profilpositiv einen entsprechenden Profilnegativabdruck hinterlassen. Die dreidimensionalen schienenförmigen Körper 4 sind in der Vulkanisationsform eingebunden, mit denen der Profilpositivabdruck im Laufstreifen erzeugt wird. Der dreidimensionale schienenförmige Körper 4 besitzt die Tiefenabmessung 12, die nicht bis zum Profilgrund des Laufstreifens 1 reicht.

Die Fig. 2 zeigt eine Aufsicht eines Ausschnittes des Laufstreifens 1. Der Ausschnitt zeigt einen sogenannten "Pitch"-Abschnitt des Laufstreifens, wobei diese Abschnitte hintereinander gereiht über den gesamten Umfang des Fahrzeugreifens angeordnet sind. Die Umfangsnuten 2a, 2b, 2c und 2d verlaufen in Umfangsrichtung des Laufstreifens 1 bzw. des Fahrzeugreifens. Horizontal zu diesen Umfangsnuten 2a bis 2d sind Quernuten 3a, 3b, 3c, 3d und 3e angeordnet. Diese Quernuten liegen jeweils versetzt zueinander und sind mit den angrenzenden Umfangsnuten 2a bis 2d verbunden. Die dreidimensionalen schienenförmigen Körper 4 liegen jeweils zwischen vier zusammenhängenden Profilblöcken 16. Die Profilblöcke 16a, 16b, 16c und 16d sind zusammenliegende Profilblöcke, zwischen denen der schienenförmige Körper 4 angeordnet ist. Der schienenförmige Körper 4 ist im Wesentlichen in den entsprechenden Umfangsnuten in der Umfangsrichtung 15 angeordnet. Dadurch werden die in der Aufsicht dargestellten Blockecken bzw. Blockkanten 7a, 7b, 7c und 7d erzeugt. Der Winkel 13 liegt vorzugsweise in einem Bereich zwischen 2 und 45°. Dieser Winkel ergibt sich aus der Umfangsrichtung 15 und der oberen Blockkante 14. Die Blockbreite 10 ist die Breite des Profilblockes 16d. Die beiden außenliegenden schienenförmigen Körper 4 besitzen die gleiche Ausrichtung in den Umfangsnuten 2a und 2d. Die beiden innenliegenden schienenförmigen Körper 4 besitzen hingegen eine entgegengesetzte Ausrichtung in den jeweiligen Umfangsnuten 2b und 2c. Die schienenförmigen Körper 4 sind in die Vulkanisationsform integriert, mit denen der Profilpositivabdruck im Laufstreifen 1 erzeugt wird.

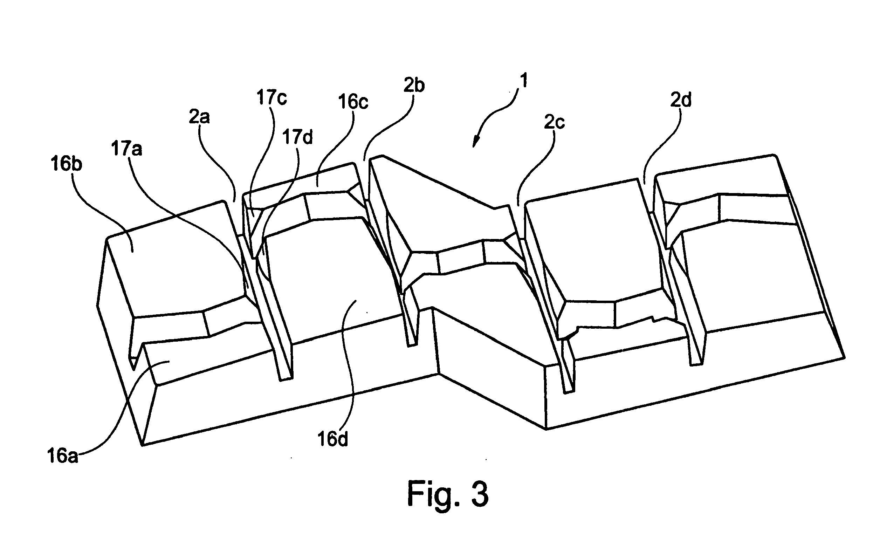

Die Fig. 3 zeigt den Laufstreifen 1 aus der Fig. 2 in einer perspektivischen Ansicht. Die Umfangsnuten 2a, 2b, 2c und 2d verlaufen in Umfangsrichtung des Laufstreifens 1. Bei dieser Ansicht sind schienenförmige Körper 4 weggelassen worden, die an den jeweiligen Profilblöcken 16 abgeschrägte Flächen 17a, 17b, 17c und 17d erzeugen. Mit diesen abgeschrägten Flächen werden Steine effektiv aus dem Profilnegativ abgewiesen.

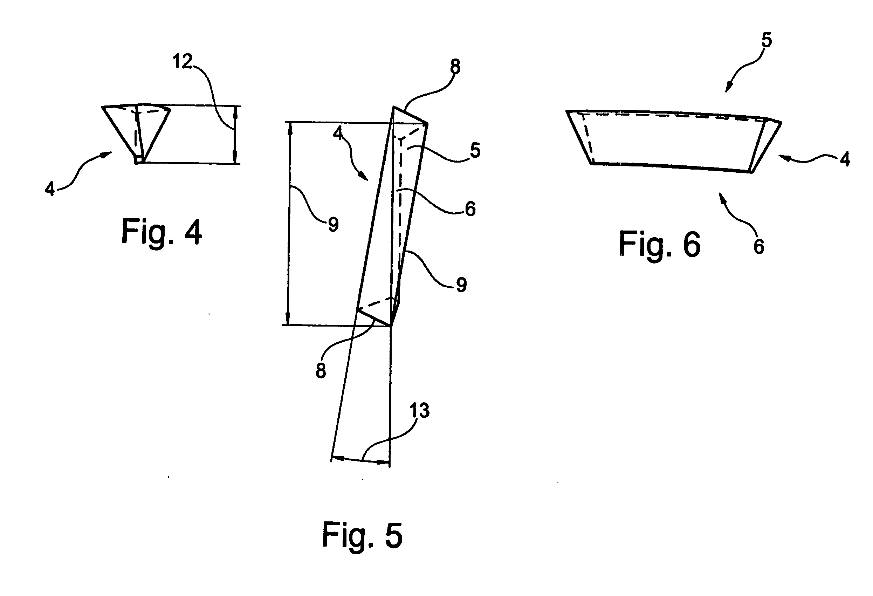

Die Fig. 4 bis 7 zeigen die spezielle Form des schienenförmigen Körpers 4. Die Fig. 4 zeigt den schienenförmigen Körper 4 in einer Ansicht von vorne, wie sie in der Ansicht in Fig. 1 zu sehen sind. Die Abmessung 12 ist die Tiefenabmessung des schienenförmigen Körpers 4.

Die Fig. 5 zeigt den schienenförmigen Körper 4 in einer Aufsicht. Die Bezugszeichen 8 zeigen die kürzeren Seiten der Oberseite des schienenförmigen Körpers. Diese Kanten 8 sind im Wesentlichen parallel zueinander angeordnet. Die Bezugszeichen 9 zeigen die längeren Seiten der Oberseite des dreidimensionalen Körpers 4. Die Länge dieser oberen Kante beträgt etwa die Blocklänge eines Profilblocks, zu dem ein Toleranzwert hinzu addiert oder abgezogen wird. Dieser Toleranzwert beträgt in etwa 8 mm. Die schmale Unterseite 6 des Körpers 4 ist schematisch durch die gestrichelten Linien dargestellt. Die schmale Unterseite verläuft im Wesentlichen diagonal zur breiteren Oberseite des Körpers 4. Auf diese Weise erhält der schienenförmige Körper 4 eine in sich gewundene bzw. tordierte Form.

Die Fig. 6 zeigt den schienenförmigen Körper 4 in einer Seitenansicht mit der breiten Oberseite 5 und der schmalen Unterseite 6.

### Bezugszeichenliste

- 1: Laufstreifen
- 2: 2a bis 2d: Umfangsnuten
- 3: 3a bis 3e: Quernuten
- 4: Schienenförmiger Körper
- 5: Breite Oberseite
- 6: Schmale Unterseite
- 7: 7a bis 7d: Blockecke
- 8: kürzere Seiten der Oberseite
- 9: längere Seiten der Oberseite
- 10: Blockbreite
- 11: Blocklänge
- 12: Tiefenabmessung des schienenförmigen Körpers
- 13: Winkel zwischen Umfangsrichtung und oberer Blockkante
- 14: Obere Blockkante
- 15: Umfangsrichtung der Umfangsnut
- 16: 16a - 16d: Profilblöcke
- 17: 17a - 17d: Abgeschrägte Flächen an den Profilblöcken

## Patentansprüche

1. Fahrzeugluftreifen für Nutzfahrzeuge mit einem Laufstreifen (1), Seitenwänden und einzelnen Profilblöcken (16), wobei die Profilblöcke (16) untereinander durch einer Anzahl von in Umfangsrichtung umlaufenden Umfangsnuten (2) und durch eine Vielzahl von Quernuten (3) getrennt sind, wobei die Quernuten (3) zueinander versetzt angeordnet sind,
wobei die Blockecken (7) von jeweils vier zusammenliegenden Profilblöcken (16) zum Abweisen von kleinen Steinen in einer symmetrischen Anordnung abgeschrägt sind, wobei sich die Form der abgeschrägten Blockecken (7) aus einem Negativabdruck eines dreidimensionalen schienenförmigen Körpers (4) ergibt, der im Wesentlichen in Längsrichtung der Umfangsnuten (2) zwischen den vier zusammenliegenden Profilblöcken (16) angeordnet ist,
**dadurch gekennzeichnet, dass**
der dreidimensionale schienenförmige Körper (4) eine breite Oberseite (5) und eine schmale Unterseite (6) in Form von Parallelogrammen aufweist, wobei die schmale Unterseite (6) in der Aufsicht diagonal zur Oberseite (5) des dreidimensionalen Körpers (4) angeordnet ist, wodurch der schienenförmige Körper (4) in seiner Längsausrichtung eine tordierte Form aufweist.

2. **Fahrzeugluftreifen nach Anspruch 1,**
**dadurch gekennzeichnet, dass**
die abgeschrägten Blockecken (7) von der Oberseite der Profilblöcke (16) zum Profilgrund hin eine stetige gekrümmte Oberfläche aufweisen, die sich aus dem Negativabdruck des schienenförmigen Körpers (4) ergeben.

3. Fahrzeugluftreifen nach einem der vorhergehenden Ansprüche
**dadurch gekennzeichnet, dass**
der Winkel (13) zwischen der Umfangsrichtung (15) der Umfangsnuten (2) und der oberen Blockkante (14) der abgeschrägten Blockecke (7a) zwischen 2 und 45 ° beträgt.

4. Fahrzeugluftreifen nach einem der vorhergehenden Ansprüche
**dadurch gekennzeichnet, dass**
die schmale Unterseite (6) des schienenförmigen Körpers (4) im Wesentlichen in Längsrichtung der Umfangsnuten (2) angeordnet ist.

5. Fahrzeugluftreifen nach einem der vorhergehenden Ansprüche
**dadurch gekennzeichnet, dass**
die kürzeren Seiten (8) des Parallelogramms der breiten Oberseite (6) des dreidimensionalen Körpers (4) eine Längenausdehnung von ca. 5 bis 20 % der Blockbreite (10) der Profilblöcke (16) aufweisen.

6. Fahrzeugluftreifen nach einem der vorhergehenden Ansprüche
**dadurch gekennzeichnet, dass**
die kürzeren Seiten (8) des Parallelogramms der breiten Oberseite (6) des dreidimensionalen Körpers (4) eine Längenausdehnung von ca. 10 bis 50 % der Blockbreite (10) der Profilblöcke (16) aufweisen.

7. Fahrzeugluftreifen nach einem der vorhergehenden Ansprüche
**dadurch gekennzeichnet, dass**
die längeren Seiten (9) des Parallelogramms der breiten Oberseite (6) des dreidimensionalen Körpers eine Längenausdehnung von ca. 70 bis 130 % der Blocklänge der Profilblöcke (16) aufweisen.

8. Fahrzeugluftreifen nach einem der vorhergehenden Ansprüche
**dadurch gekennzeichnet, dass**
die Tiefenabmessung (12) des schienenförmigen Körpers (4) ca. 25 % der Profiltiefe des Laufstreifens (1) beträgt.

## Claims

1. Pneumatic vehicle tyre for commercial vehicles, with a tread rubber (1), sidewalls and single profile blocks (16), the profile blocks (16) being separated from one another by a number of circumferential grooves (2), running around in the circumferential direction, and by a multiplicity of transverse grooves (3), the transverse grooves (3) being arranged offset in relation to one another, wherein the block corners (7) of respective groups of four profile blocks (16) that lie together are bevelled in a symmetrical arrangement to deflect small stones, the form of the bevelled block corners (7) being obtained from a negative impression of a three-dimensional rail-shaped body (4), which is arranged substantially in the longitudinal direction of the circumferential grooves (2) between the four profile blocks (16) lying together, **characterized in that** the three-dimensional rail-shaped body (4) has a wide upper side (5) and a narrow underside (6) in the form of parallelograms, the narrow underside (6) being arranged in plan view diagonally in relation to the upper side (5) of the three-dimensional body (4), whereby the rail-shaped body (4) has a twisted form in its longitudinal orientation.

2. Pneumatic vehicle tyre according to Claim 1, **characterized in that**, from the upper side of the profile blocks (16) to the profile base, the bevelled block corners (7) have a continuous curved surface, which is obtained from the negative impression of the rail-shaped body (4).

3. Pneumatic vehicle tyre according to one of the preceding claims, **characterized in that** the angle (13) between the circumferential direction (15) of the circumferential grooves (2) and the upper block edge (14) of the bevelled block corner (7a) is between 2 and 45°.

4. Pneumatic vehicle tyre according to one of the preceding claims, **characterized in that** the narrow underside (6) of the rail-shaped body (4) is arranged substantially in the longitudinal direction of the circumferential grooves (2).

5. Pneumatic vehicle tyre according to one of the preceding claims, **characterized in that** the shorter sides (8) of the parallelogram of the wide upper side (5) of the three-dimensional body (4) have a longitudinal extent of about 5 to 20% of the block width (10) of the profile blocks (16).

6. Pneumatic vehicle tyre according to one of the preceding claims, **characterized in that** the shorter sides (8) of the parallelogram of the wide upper side (5) of the three-dimensional body (4) have a longitudinal extent of about 10 to 50% of the block width (10) of the profile blocks (16).

7. Pneumatic vehicle tyre according to one of the preceding claims, **characterized in that** the longer sides (9) of the parallelogram of the wide upper side (5) of the three-dimensional body have a longitudinal extent of about 70 to 130% of the block length of the profile blocks (16).

8. Pneumatic vehicle tyre according to one of the preceding claims, **characterized in that** the depth dimension (12) of the rail-shaped body (4) is about 25% of the profile depth of the tread rubber (1).

## Revendications

1. Pneu de véhicule pour véhicules utilitaires comprenant une bande de roulement (1), des parois latérales et des blocs profilés individuels (16), les blocs profilés (16) étant séparés les uns des autres par une pluralité de rainures périphériques (2) s'étendant sur le pourtour dans la direction périphérique et par une pluralité de rainures transversales (3), les rainures transversales (3) étant disposées de manière décalée les unes par rapport aux autres,
les coins des blocs (7) de quatre blocs profilés respectivement rattachés (16) étant biseautés dans un agencement symétrique pour repousser de petits gravillons, la forme des coins des blocs (7) biseautés s'obtenant par une impression négative d'un corps tridimensionnel en forme de rail (4), qui est disposé essentiellement dans la direction longitudinale des rainures périphériques (2) entre les quatre blocs profilés rattachés (16),
**caractérisé en ce que**
le corps tridimensionnel en forme de rail (4) présente un côté supérieur large (5) et un côté inférieur étroit (6) en forme de parallélogramme, le côté inférieur étroit (6) étant disposé, en vue de dessus, de manière diagonale par rapport au côté supérieur (5) du corps tridimensionnel (4), de sorte que le corps en forme de rail (4) présente une forme tordue dans son étendue longitudinale.

2. Pneu de véhicule selon la revendication 1,
**caractérisé en ce que**
les coins des blocs biseautés (7) présentent, depuis le côté supérieur des blocs profilés (16) jusqu'au fond de profilé, une surface de courbure constante qui s'obtient à partir de l'impression négative du corps en forme de rail (4).

3. Pneu de véhicule selon l'une quelconque des revendications précédentes,
**caractérisé en ce que**
l'angle (13) entre la direction périphérique (15) des rainures périphériques (2) et l'arête de bloc supérieure (14) des coins de bloc biseautés (7a) est compris entre 2 et 45°.

4. Pneu de véhicule selon l'une quelconque des revendications précédentes,
**caractérisé en ce que**
le côté inférieur étroit (6) du corps en forme de rail (4) est disposé essentiellement dans la direction longitudinale des rainures périphériques (2).

5. Pneu de véhicule selon l'une quelconque des revendications précédentes,
**caractérisé en ce que**
les côtés plus courts (8) du parallélogramme du côté supérieur large (5) du corps tridimensionnel (4) présentent une étendue en longueur d'environ 5 à 20 % de la largeur de bloc (10) des blocs profilés (16).

6. Pneu de véhicule selon l'une quelconque des revendications précédentes,
**caractérisé en ce que**
les côtés plus courts (8) du parallélogramme du côté supérieur large (5) du corps tridimensionnel (4) présentent une étendue en longueur d'environ 10 à 50 % de la largeur de bloc (10) des blocs profilés (16).

7. Pneu de véhicule selon l'une quelconque des revendications précédentes,
**caractérisé en ce que**
les côtés plus longs (9) du parallélogramme du côté supérieur large (5) du corps tridimensionnel présentent une étendue en longueur d'environ 70 à 130 % de la longueur de bloc des blocs profilés (16).

8. Pneu de véhicule selon l'une quelconque des revendications précédentes,
**caractérisé en ce que**
la dimension en profondeur (12) du corps en forme de rail (4) vaut approximativement 25 % de la profondeur de profilé de la bande de roulement (1).
